# EUROPEAN PATENT SPECIFICATION

(11) **EP 2 306 371 B1**
(45) Date of publication and mention of the grant of the patent: **16.01.2013**
(21) Application number: 10185552.6
(22) Date of filing: 01.10.2010
(51) Int. Cl.: G06K 19/077

(54) **Method for making a protected radio-frequency identifying device**
Verfahren zur Herstellung einer geschützten RFID Vorrichtung
Procédé de fabrication d'un dispositif RFID protégé

(30) Priority: 02.10.2009 IT MO20090242
(43) Date of publication of application: 06.04.2011
(73) Proprietor: Smart Res Societa' Per Azioni, 41057 Spilamberto (MO) (IT)
(72) Inventor: Lolli, Marcello, 41051, Castelnuovo Rangone (MO) (IT)
(74) Representative: Crugnola, Pietro

(56) References cited:
- EP-A2- 1 887 493
- WO-A1-01/75843
- WO-A1-2004/081860

## Description

The present invention relates to a method for making a RFID device, i.e. a protected radio-frequency identifying device. The use of RFID devices applied to products for sale in shops or supermarkets is currently widespread, both to combat shoplifting, and with the function of rapid identification of the product via suitable remote readers, to carry out, for example, inventories and statistics on the sale of products.

In different applications the RFID device has to resist physical stress or chemical corrosion, such as, for example, in the repeated industrial washing cycles, and must therefore be protected.

Protection is normally achieved by incorporating the RFID device made of plastics for example by an injection moulding process or by lamination between two layers of thermoplastic or adhesive material.

In the injection moulding process it is particularly difficult to position the RFID device in the injection mould.

In the lamination between two layers of thermoplastic or adhesive material the RFID device can prevent complete welding of the two layers of thermoplastic or adhesive material between which the RFID device is inserted.

Also using liquid or fluid plastics entails the problem of correct positioning of the RFID device.

W02004/081860 discloses a method for making a protected radio-frequency identifying device. The radio-frequency identifying device comprises a transponder (TAG) arranged on a flexible and traction-resistant support. The method comprises sticking a protective layer to both sides of the support comprising the circuit elements of the transponder in a tight manner or the transponder is welded between said protective layers. The protective layers are not stuck or welded together, but each protective layer is stuck only to a side of the support. This arrangement may cause a detachment, even only a partial detachment, of the protective layers from the surfaces of the support, if the device is subject to repeated stresses thus exposing the transponder to dust, moisture or other contaminants coming from the outer environment.

The object of the present invention is to provide a method for making a protected radio-frequency identifying device that does not have the aforementioned drawbacks.

The aforesaid object is achieved with a method according to the invention 1.

In a first step the RFID device is applied by transfer onto a support made of fabric, preferably a fabric with a wide weave.

This step has the object of both retaining the RFID device in the correct position on the support made of fabric and of giving the finished product resistance to stretching.

In a second step the support made of fabric to which the RFID device has been applied is covered on both sides with a layer of film of plastics through lamination, or with a layer of liquid or fluid plastics through smearing.

The plastics are infiltrated into the weave of the fabric, which enables the two layers of plastics to be perfectly welded between the sides thereof, avoiding any risk of delamination.

The invention will now be disclosed below by way of non limiting example with reference to the attached drawing, in which:
Figures 1, 2 and 3 schematically illustrate embodiments of the method according to the invention;
Figure 4 is a schematic illustration of a protected RFID device that is obtainable with the method according to the invention.

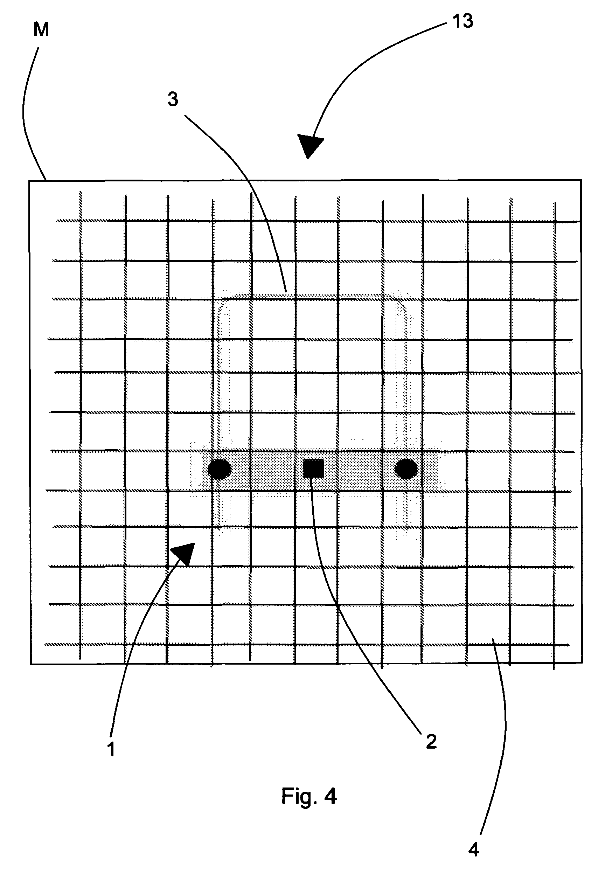

According to the method of the present invention an RFID device 1, comprising a microchip 2 connected to a copper-wire antenna 3, is positioned on a surface of a support 4 made of fabric that is then covered on both sides with a respective layer of coating material M (Figure 4). The coating material M can be a material that sets after heat treatment or a material consisting of 2 or more components that sets following a chemical reaction, or a thermoplastic film.

The RFID device 1 can be advantageously applied to the surface of the support 4 made of fabric by heat transfer, as disclosed in the patent application for invention M02008A000247 in the name of the same applicant.

It is advantageous for the fabric support 4 to which the RFID device 1 is supplied to be wide weave, because in this case the coating material penetrates more easily into the weave of the fabric 4, after setting of the coating material, facilitating the formation of a compact single block consisting of the coating material with the RFID device 1 incorporated therein.

It is further advantageous for the support 4 to consist of a net.

It is also advantageous for the antenna 4 of the RFID device 1 to be made of copper wire rather than of metal engraved on a polyester supporting film because with the copper wire antenna the supporting film is not necessary and there is thus the best possible adhesion between the two layer of coating material that incorporate the RFID device 1, as the absence of the supporting film minimises the risk of formation of empty spaces between the two aforesaid layers of coating material.

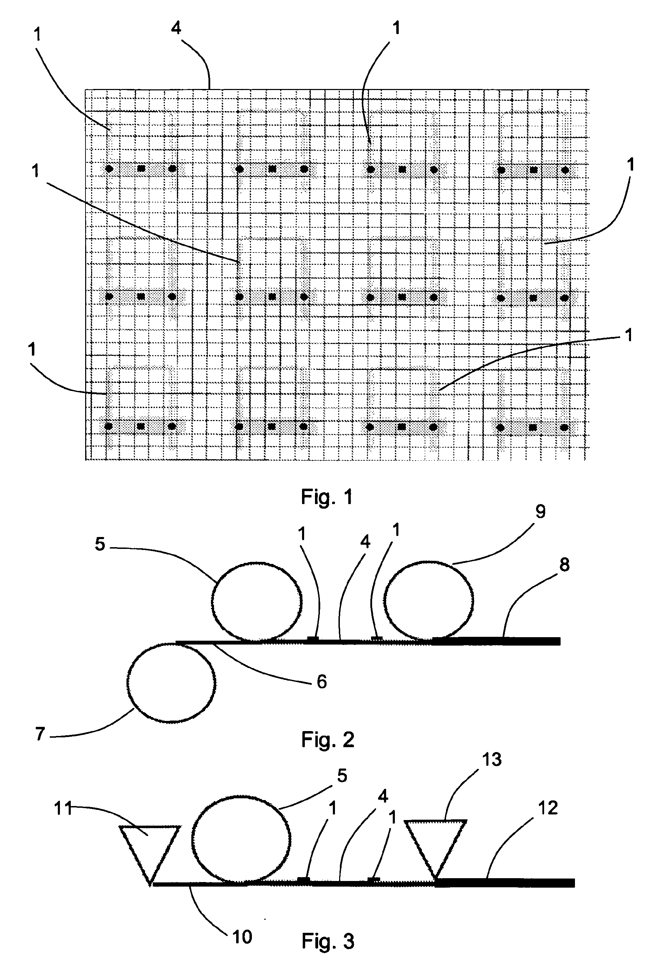

In Figures 1 to 3 embodiments of the method according to the invention are illustrated.

In a first step of the method according to the invention, a plurality of RDFID devices 1 is applied in set positions to a support 4 made of fabric. The application can be advantageously made by heat transfer, as disclosed in the aforementioned patent application M02008A000247. The support made of fabric, with the RFID devices 1 applied thereto it then wound on a reel 5.

In a first embodiment of the method according to the invention (Figure 2) a first film 6 of thermoplastic or thermosetting material is unwound from a second reel 7 and the support 4 made of fabric with the RFID devices 1 is placed thereupon, unwinding it from the reel 5. Subsequently, a second film 8 of said thermoplastic or thermosetting material, unwound from a third reel 9, is superimposed on the support 4 made of fabric so that the support 4 made of fabric is enclosed between the first film 6 and the second film 8 made of thermoplastic material.

The set consisting of the two films 6, 8 made of thermoplastic material and of the support 4 made of fabric with the RFID devices applied thereto is hot-pressed by a calender (not shown) so as to cause the first film 6 and the second film 8 of thermosplastic material to be welded together, between which the support 4 made of fabric with RFID devices 1 is enclosed.

A compact set is thus obtained, consisting of the two layers 6, 8 of film made of thermoplastic material that are welded together and enclose the support 4 made of fabric with the RFID devices 1. This set is then cut in such a manner as to obtain single compact elements 14, each of which encloses a single RFID device 1 with the support 4 made of fabric.

In Figure 3 there is illustrated a further embodiment of the method according to the invention.

In this further embodiment, a first layer 10 of liquid or fluid coating material is placed, via a first applying device 11, to a resting surface, for example to the bottom of a mould or to a movable belt (not shown). The support 4 made of fabric, with the RFID devices 1 applied thereto, is placed on said first layer 9, being unwound from the reel 5. Subsequently, a second layer 12 of said coating material is placed on the fabric 4 by a second applying device 13.

The coating material of the first layer 10 and of the second layer 12, being in a liquid or fluid state, penetrates the weave of the support 4 made of fabric completely enclosing the RFID devices 1.

The coating material can be a thermosetting material, such as for example, silicone or rubber, or a material consisting of 2 more components that sets by means of a chemical reaction between the components, such as, for example, polyurethanes or epoxy resins with a possible contribution of heat.

The coating material is subsequently subjected to heat treatment, or to chemical treatment, or to both to cause setting thereof, so as to obtain a compact set consisting of the two layers 10, 12 of coating material melted together, which form an external casing that incorporates the support 4 made of fabric with the RFID devices 1.

This set is then cut such as to obtain single compact elements 14, each of which comprises said external casing that encloses a single RFID device 1 with the support 4 made of fabric thereof.

## Claims

1. Method for making a protected radio-frequency identifying device (1), comprising positioning said device (1) on a surface of a support (4), applying to both faces of said support (4) a respective layer (6, 8; 10, 12) of a coating material (M), forming by means of said coating material (M) a protective casing inside which said device (1) and said support (4) are enclosed, **characterised in that** said support (4) is a support made of a fabric with a wide weave, or a net, **in that** said coating material (M) is in the form of a thermoplastic film (6, 8), said forming comprising applying a first film (6) and a second film (8) of said thermoplastic material to said support (4) so that said support (4) is enclosed between said first film (6) and said second film (8), hot pressing said thermoplastic material so as to cause said first film (6) and said second film (8) to be welded together, and **in that** said radio-frequency identifying device (2) comprises an antenna (3) made of copper wire.

2. Method for making a protected radio-frequency identifying device (1), comprising positioning said device (1) on a surface of a support (4), applying to both faces of said support (4) a respective layer (6, 8; 10, 12) of a coating material (M), forming by means of said coating material (M) a protective casing inside which said device (1) and said support (4) are enclosed, **characterised in that** said support (4) is a support made of a fabric with a wide weave, or a net, **in that** said coating material (M) is in liquid or fluid form, suitable for being set by physical or chemical treatment, said forming comprising applying said coating material in liquid or fluid form to said support (4) so that said coating material penetrates into said support (4) and causing said coating material (M) to set by said physical or chemical treatment.

3. Method according to claim 2, wherein said coating material (M) is a thermosetting material.

4. Method according to claim 2, wherein said coating material (M) is a material consisting of two or more components that set by means of a chemical reaction between the components thereof.

5. Method according to any preceding claim, wherein said device (1) is positioned on said support (4) by means of heat transfer.

6. Product (14) comprising a radio-frequency identifying device (1) applied to a support (4) and an outer casing consisting of a coating material (M) that encloses said support (4) and said radio-frequency identifying device (1), **characterised in that** said support (4) is a support made of fabric with a wide weave, or a net and **in that** said coating material (M) is in the form of a thermoplastic film (6, 8) comprising a first film (6) and a second film (8) welded together and enclosing said support (4) with said radio-frequency identifying device (1) applied thereto, and **in that** said device (1) comprises an antenna (3) made of copper wire.

7. Product (14) comprising a radio-frequency identifying device (1) applied to a support (4) and an outer casing consisting of a coating material (M) that encloses said support (4) and said radio-frequency identifying device (1), **characterised in that** said support (4) is a support made of fabric with a wide weave, or net and **in that** said coating material (M) encloses said support (4) with said radio-frequency identification device (1) applied thereto, and **in that** said device (1) comprises an antenna (3) made of copper wire, and **in that** the coating material (M) is made of a liquid or fluid material suitable for penetrating the support (4) and has been set by physical or chemical treatment.

## Patentansprüche

1. Verfahren zur Herstellung eines geschützten Funkfrequenzerkennungsgeräts (1), umfassend das Positionieren des Geräts (1) auf einer Fläche eines Trägers (4), Aufbringen einer jeweiligen Schicht (6, 8; 10, 12) eines Beschichtungsmaterials (M) auf beide Oberflächen des Trägers (4), mittels des Beschichtungsmaterials (M) und Bilden eines Schutzgehäuses, in dem das Gerät (1) und der Träger (4) eingeschlossen sind, **dadurch gekennzeichnet, dass** der Träger (4) ein Träger ist, der aus einem Gewebe mit einer weiten Webart oder einem Netz hergestellt ist, dass das Beschichtungsmaterial (M) die Form eines thermoplastischen Films (6, 8) besitzt, wobei das Bilden Aufbringen eines ersten Films (6) und eines zweiten Films (8) des thermoplastischen Materials auf den Träger (4) umfasst, so dass der Träger (4) zwischen dem ersten (6) und dem zweiten Film (8) eingeschlossen ist, und Warmpressen des thermoplastischen Materials, um zu veranlassen, dass der erste Film (6) und der zweite Film (8) miteinander verschweißt werden, umfasst, und dass das Funkfrequenzerkennungsgerät (2) eine aus Kupferdraht hergestellte Antenne (3) umfasst.

2. Verfahren zur Herstellung eines geschützten Funkfrequenzerkennungsgeräts (1), umfassend das Positionieren des Geräts (1) auf einer Fläche eines Trägers (4), Aufbringen einer jeweiligen Schicht (6, 8; 10, 12) eines Beschichtungsmaterials (M) auf beide Oberflächen des Trägers (4), mittels des Beschichtungsmaterials (M) das Bilden eines Schutzgehäuses, in dem das Gerät (1) und der Träger (4) eingeschlossen sind, **dadurch gekennzeichnet, dass** der Träger (4) ein Träger ist, der aus einem Gewebe mit einer weiten Webart oder einem Netz hergestellt ist, dass das Beschichtungsmaterial (M) die Form einer Flüssigkeit oder eines Strömungsmittels besitzt, die bzw. das dazu geeignet ist, durch physikalische oder chemische Behandlung ausgehärtet zu werden, wobei das Bilden Aufbringen des Beschichtungsmaterials in flüssiger oder strömungsfähiger Form auf den Träger (4), so dass das Beschichtungsmaterial in den Träger (4) eindringt, und durch physikalische oder chemische Behandlung veranlassen, dass das Beschichtungsmaterial (M) aushärtet, umfasst.

3. Verfahren nach Anspruch 2, bei dem das Beschichtungsmaterial (M) ein warm aushärtendes Material ist.

4. Verfahren nach Anspruch 2, bei dem das Beschichtungsmaterial (M) ein Material ist, das aus zwei oder mehr Komponenten besteht, die durch eine chemische Reaktion zwischen deren Komponenten aushärten.

5. Verfahren nach einem der vorhergehenden Ansprüche, wobei das Gerät (1) mittels Wärmeübertragung auf dem Träger (4) positioniert wird.

6. Erzeugnis (14), umfassend ein Funkfrequenzerkennungsgerät (1), angebracht an einem Träger (4) und einem äußeren Gehäuse, das aus einem Beschichtungsmaterial (M) besteht, das den Träger (4) und das Funkfrequenzerkennungsgerät (1) einschließt, **dadurch gekennzeichnet, dass** der Träger (4) ein Träger ist, der aus einem Gewebe mit einer weiten Webart oder einem Netz hergestellt ist, und dass das Beschichtungsmaterial (M) die Form eines thermoplastischen Films (6, 8) hat, der aus einem ersten Film (6) und einem zweiten Film (8) besteht, die miteinander verschweißt sind und den Träger (4) einschließen, wobei das Funkfrequenzerkennungsgerät (1) daran angebracht ist, und dass das Gerät (1) eine aus Kupferdraht hergestellte Antenne (3) umfasst.

7. Erzeugnis (14), umfassend ein Funkfrequenzerkennungsgerät (1), angebracht an einem Träger (4) und einem äußeren Gehäuse, das aus einem Beschichtungsmaterial (M) besteht, das den Träger (4) und das Funkfrequenzerkennungsgerät (1) einschließt, **dadurch gekennzeichnet, dass** der Träger (4) ein Träger ist, der aus Gewebe mit einer weiten Webart oder einem Netz hergestellt ist, und dass das Beschichtungsmaterial (M) den Träger (4) mit dem daran angebrachten Funkfrequenzerkennungsgerät (1) einschließt, und dass das Gerät (1) eine aus Kupferdraht hergestellte Antenne (3) umfasst, und dass das Beschichtungsmaterial (M) aus einer Flüssigkeit oder einem strömungsfähigen Material hergestellt ist, das geeignet ist, in den Träger (4) einzudringen, und durch physikalische oder chemische Behandlung ausgehärtet wurde.

## Revendications

1. Procédé pour fabriquer un dispositif d'identification par radiofréquence (1) protégé, comprenant le positionnement dudit dispositif (1) sur une surface d'un support (4), l'application sur les deux surfaces dudit support (4) d'une couche respective (6, 8; 10, 12) d'une matière de revêtement (M), la formation au moyen de ladite matière de revêtement (M) d'une enveloppe protectrice à l'intérieur de laquelle ledit dispositif (1) et ledit support (4) sont enfermés, **caractérisé en ce que** ledit support (4) est un support constitué d'un tissu avec une armure large, ou un filet, **en ce que** ladite matière de revêtement (M) est sous la forme d'un film thermoplastique (6, 8), ladite formation comprenant l'application d'un premier film (6) et d'un second film (8) de ladite matière thermoplastique sur ledit support (4) de sorte que ledit support (4) est enfermé entre ledit premier film (6) et ledit second film (8), le pressage à chaud de ladite matière thermoplastique de manière à amener ledit premier film (6) et ledit second film (8) à être soudés ensemble, et **en ce que** ledit dispositif d'identification par radiofréquence (2) comprend une antenne (3) faite en fil de cuivre.

2. Procédé pour fabriquer un dispositif d'identification par radiofréquence (1) protégé, comprenant le positionnement dudit dispositif (1) sur une surface d'un support (4), l'application sur les deux surfaces dudit support (4) d'une couche respective (6, 8; 10, 12) d'une matière de revêtement (M), la formation au moyen de ladite matière de revêtement (M) d'une enveloppe protectrice à l'intérieur de laquelle ledit dispositif (1) et ledit support (4) sont enfermés, **caractérisé en ce que** ledit support (4) est un support constitué d'un tissu avec une armure large, ou un filet, **en ce que** ladite matière de revêtement (M) est sous forme liquide ou fluide, adaptée pour être durcie par un traitement physique ou chimique, ladite formation comprenant l'application de ladite matière de revêtement sous forme liquide ou fluide sur ledit support (4) de sorte que ladite matière de revêtement pénètre dans ledit support (4) et amène ladite matière de revêtement (M) à durcir par ledit traitement physique ou chimique.

3. Procédé selon la revendication 2, dans lequel ladite matière de revêtement (M) est une matière thermodurcissable.

4. Procédé selon la revendication 2, dans lequel ladite matière de revêtement (M) est une matière constituée de deux ou plus de deux composants qui durcissent au moyen d'une réaction chimique entre les composants de celle-ci.

5. Procédé selon l'une quelconque des revendications précédentes, dans lequel ledit dispositif (1) est positionné sur ledit support (4) au moyen d'un transfert de chaleur.

6. Produit (14) comprenant un dispositif d'identification par radiofréquence (1) appliqué sur un support (4) et une enveloppe extérieure constituée d'une matière de revêtement (M) qui enferme ledit support (4) et ledit dispositif d'identification par radiofréquence (1), **caractérisé en ce que** ledit support (4) est un support constitué d'un tissu avec une armure large, ou un filet, et **en ce que** ladite matière de revêtement (M) est sous la forme d'un film thermoplastique (6, 8) comprenant un premier film (6) et un second film (8) soudés ensemble et enfermant ledit support (4) avec ledit dispositif d'identification par radiofréquence (1) appliqué sur celui-ci, et **en ce que** ledit dispositif (1) comprend une antenne (3) faite en fil de cuivre.

7. Produit (14) comprenant un dispositif d'identification par radiofréquence (1) appliqué sur un support (4) et une enveloppe extérieure constituée d'une matière de revêtement (M) qui enferme ledit support (4) et ledit dispositif d'identification par radiofréquence (1), **caractérisé en ce que** ledit support (4) est un support constitué d'un tissu avec une armure large, ou un filet, et **en ce que** ladite matière de revêtement (M) enferme ledit support (4) avec ledit dispositif d'identification par radiofréquence (1) appliqué sur celui-ci, et **en ce que** ledit dispositif (1) comprend une antenne (3) faite en fil de cuivre, et **en ce que** la matière de revêtement (M) est constituée d'une matière liquide ou fluide adaptée pour pénétrer dans le support (4) et a été durcie par un traitement physique ou chimique.
